# EUROPEAN PATENT SPECIFICATION

(11) **EP 0 356 854 B1**
(45) Date of publication and mention of the grant of the patent: **08.09.1993**
(21) Application number: 89115346.2
(22) Date of filing: 19.08.1989
(51) Int. Cl.: C01D 3/18, A62D 3/00, C01F 1/00, C01D 5/00

(54) **Treatment of inorganic salts contaminated with organic compounds**
Behandlung von mit organischen Verbindungen verunreinigten anorganischen Salzen
Traitement de sels minéraux contaminés par des composés organiques

(30) Priority: 29.08.1988 US 238027
(43) Date of publication of application: 07.03.1990
(73) Proprietor: THE DOW CHEMICAL COMPANY, Midland Michigan 48640-1967 (US)
(72) Inventor: Gammill, Benny B., Angleton Texas 77515 (US); Sawa, Hiroshi, Handashi Aichi-ken 475 (JP); Suzuki, Tamio, Kawaguchi-cho Nishio-shi 445 (JP)
(74) Representative: Sternagel, Hans-Günther, Dr.

(56) References cited:
- WO-A-88/09199
- US-A- 3 847 496
- US-A- 3 904 585
- US-A- 4 662 948
- CHEMICAL ABSTRACTS, vol. 89, no. 4, 24 July 1978 Columbus, Ohio, USA Kremenskaya I.N. et al.: "Removal of organic contaminants after extraction with 8-hydroxyquinoline" page 139; left-hand column; ref. no. 26797C & Zh.Prikl.Khim.(Leningrad) 1978, 51(2), 475

## Description

The present invention pertains to the treatment of inorganic salts contaminated with organic compounds.

Various processes for the production of organic compounds such as the production of epoxy resins from a hydroxyl-containing compound and an epihalohydrin and an alkali metal or alkaline earth metal hydroxide or carbonate and the like also produce large quantities of an inorganic salt which must be disposed in an environmentally acceptable manner. In many of these organic processes such as the production of epoxy resins, this inorganic salt is contaminated with not only the organic reactant materials, but are also contaminated with high boiling organic by-product compounds. One method for disposal of contaminated salts is by land-fill which is not only expensive but a less desirable method of disposal. In the process for the production of epoxy resins, this salt contaminated with epihalohydrin and high boiling by-product compounds is treated by dissolving the contaminated salt in water and sending the resulting brine to treatment ponds.

While this method is acceptable, it nevertheless results in a salt-water solution, brine, which contains significant amounts of relatively high boiling organic chemical contaminants. This salt-water solution contains significantly high quantities of total organic carbon, TOC, resulting in high total oxygen demand, TOD, biological oxygen demand, BOD or chemical oxygen demand, COD. These significantly high quantities of TOC, TOD, BOD or COD places a huge load on organic waste treatment ponds. Not only is this expensive, but the salt is lost which if treated such that there were insignificant quantities of organic contaminants present it could be used as a raw material for subsequent processes employing such salts.

It would be highly desirable to have a method whereby an inorganic salt contaminated with relatively high boiling point organic chemical contaminants could be treated so as to remove a significant amount of the organic chemical contaminants from the inorganic salt so that it could be employed in subsequent useful purposes for which said inorganic salt is known.

US-A-4,662,948 discloses a method for removing polychlorinated biphenyls and dioxins from soil, landfill, gravel, sand, clay or a mixture thereof by washing the material with halogenated hydrocarbons, comprising fluorinated hydrocarbons, and/or polar organic solvents including lower alcohols and ketones. The liquid is separated from the material after the washing process.

It is the object of the present invention to provide a method for removing relatively high boiling chemical contaminants from a contaminated material. This object is attained by
(A) washing said contaminated material with a solvent or a mixture of solvents selected from the group of ketones, alcohols in which the organic chemical contaminant(s) is (are) soluble at the treatment temperature, thereby forming a liquor containing the solvent(s) and the contaminant(s) and separating the liquor and said material by any suitable means,
   **characterized in that**
   the contaminated material is an inorganic salt contaminated with reaction products of epihalohydrin and water and the group of solvents comprising furthermore epihalohydrins, aromatic hydrocarbons and glycolethers and
(B) excess liquor is removed from the thus treated salt such that the resultant inorganic salt composition contains not more than 60 percent liquor by weight;
(C) the thus treated inorganic salt composition is subjected to drying at conditions of temperature and pressure sufficient to remove the residual solvent or solvent mixture remaining in the inorganic salt composition after step (B), thereby producing an inorganic salt containing on a dry basis not more than 700 parts per million parts by weight total organic carbon.

The contaminated inorganic salt composition can be removed from the mother liquor which contains such contaminated inorganic salts by first subjecting the composition to drying, if it contains water, such that the water content of the composition is suitably not more than 2, more suitably not more than 1, most suitably not more than 0.2, percent by weight. This can be accomplished, for example, by drying at any suitable temperature and pressure, such as, for example, at a temperature suitably from 40°C to 150°C, more suitably from 50°C to 100°C, most suitably from 60°C to 70°C; and at pressures suitably from 13.79 kPa (2 psia) to 206.84 kPa (30 psia,) more suitably from 20.68 kPa (3 psia) to 137.90 kPa (20 psia), most suitably from 27.58 kPa (4 psia) to 103.42 kPa (15 psia); for a time sufficient to reduce the non-chemically bound water content to the desired level.

The inorganic salt contaminated by the relatively high boiling chemical contaminants can be removed from the product stream containing the contaminated inorganic salt and the product and any unreacted reactants by any suitable means such as, for example, filtration, centrifugation, precipitation, decantation, or the like.

The resultant contaminated inorganic salt composition is then washed one or more times with an organic solvent or mixture of organic solvents in an amount suitably from 0.76 to 18.93 l (from 0.2 to 5 gallons), more suitably from 1.14 to 11.36 l (from 0.3 to 3 gallons), most suitably from 1.89 to 3.79 l (from 0.5 to 1 gallon[s]) of solvent per pound of inorganic salt being treated.

Suitable solvents include, for example, halogenated hydrocarbons; ketones, aliphatic alcohols, aromatic hydrocarbons, glycol ethers, and combinations thereof. Particularly suitable solvents include, for example, epichlorohydrin, methyl ethyl ketone, methyl isobutyl ketone, toluene, xylene, benzene, methanol, ethanol, isopropanol, propylene glycol methyl ether, and combinations thereof.

The temperature at which the solvent(s) is (are) employed to wash the contaminated inorganic salt is not critical. However, suitable temperatures are from 5°C to 100°C, more suitably from 10°C to 60°C, most suitably from 20°C to 40°C.

After washing the contaminated inorganic salt with the solvent or solvent mixture, the thus treated inorganic salt composition is then deliquored by filtration, centrifugation, precipitation, decantation, or the like to the extent that the inorganic salt composition suitably contains not more than 60, more suitably not more than 40, most suitably not more than 20 percent by weight of the volatile organic components.

Upon completion of the deliquoring, the inorganic salt composition is then dried in a suitable drier to remove the organic solvents. The drying can be conducted at temperatures suitably from 40°C to 600°C, more suitably from 50°C to 300°C, most suitably from 60°C to 150°C. This drying step can be conducted in any drying equipment which is suitable for this purpose. Particularly suitable drying equipment include, for example, Torus Disc driers, fluid bed driers, and the like. This drying step is suitably conducted at pressures of from 1.38 to 310.28 kPa (from 0.2 to 45 psia), more suitably from 27.58 to 206.85 kPa (from 4 to 30 psia), most suitably from 55.16 to 137.90 kPa (from 8 to 20 psia).

The method of the present invention produces, after the drying step, an inorganic salt which contains on a dry weight basis not more than 700, suitably not more than 285, more suitably not more than 140, most suitably not more than 70, parts per million parts by weight (ppm) total organic carbon (TOC).

The chemical contaminants can be removed from the solvent(s) by distillation, if the difference between the boiling points of the solvent(s) and the organic chemical contaminant(s) will permit it, otherwise, they can be removed by water washing and subsequently disposed of by burning.

This method for removing relatively high boiling organic chemical contaminants is particularly suitable in the treatment of the alkali metal halide produced in the manufacture of epoxy resins by dehydrohalogenating the reaction product of an aliphatic hydroxyl-containing compound with an epihalohydrin. In this case, the relatively high boiling organic chemical contaminants are reaction products of epihalohydrin and water, i.e., glycerine (B.P.:290°C) and glycerine monochlorohydrin (B.P.:213°C) or any reactive organics that tend, through polymerization or intercomponent reaction followed by polymerization to form compounds having vapor pressures so low as to require temperatures equal to or greater than the thermal decomposition temperature of said products or the melt point of the salt components for effective removal by conventional distillation methods. Examples of the reactive organics are glycidyl derivatives of aromatic compounds containing an active hydrogen atom reacted with an epihalohydrin. Other processes include, for example, cleaning and recovering the salt from the manufacture of glycerine from epichlorohydrin and the like.

The following example is illustrative of the invention.

### Example

One hundred thirty-six (136) kg (300 lbs.) of sodium chloride from an epoxy resin process containing 30 percent by weight (pbw) of epichlorohydrin, 0.5 to 1.5 pbw of a mixture of glycerine monochlorohydrin and glycerine dichlorohydrin and 10 pbw of epoxy resin was washed with 290 gallons (1089.9 l) of a 90/10 weight percent mixture of epichlorohydrin/propylene glycol methyl ether (1-methoxy-2-propanol) in a basket centrifuge at a temperature of 35°C for 30 minutes at 300 rpm. This was followed by washing the salt with 107 gallons (405 l) of epichlorohydrin at a temperature of 30°C for 11 minutes in the centrifuge running at 300 rpm. The salt was then deliquored in the basket centrifuge running at 800 rpm for 2 to 4 minutes resulting in a sodium chloride cake containing 17-23 percent residual volatiles by weight based on dry salt weight. The salt was then dried in a Torus Disc drier at a temperature of 90°C to 120°C for 15 to 20 minutes. After this time, the sodium chloride contained 303 ppm by weight of epichlorohydrin and 47 ppm by weight of propylene glycol methyl ether (1-methoxy-2-propanol). A sample of this salt was dissolved in deionized water to make an 18 percent brine solution. A total organic carbon (TOC) analysis revealed 40-50 ppm TOC in the brine solution. On a dry basis, the treated, dried salt contained 222-278 ppm TOC.

## Claims

1. A method for removing relatively high boiling chemical contaminants from a contaminated material by
(A) washing said contaminated material with a solvent or a mixture of solvents selected from the group of ketones, alcohols in which the organic chemical contaminant(s) is (are) soluble at the treatment temperature, thereby forming a liquor containing the solvent(s) and the contaminant(s) and separating the liquor and said material by any suitable means,
**characterized in that**
the contaminated material is an inorganic salt contaminated with reaction products of epihalohydrin and water and the group of solvents comprising furthermore epihalohydrins, aromatic hydrocarbons and glycolethers and
(B) excess liquor is removed from the thus treated salt such that the resultant inorganic salt composition contains not more than 60 percent liquor by weight;
(C) the thus treated inorganic salt composition is subjected to drying at conditions of temperature and pressure sufficient to remove the residual solvent or solvent mixture remaining in the inorganic salt composition after step (B), thereby producing an inorganic salt containing on a dry basis not more than 700 parts per million parts by weight total organic carbon.

2. The method of Claim 1 wherein
(a) the contaminated inorganic salt is washed with from 0.76 to 18.93 l (0.2 to 5 gallon(s)) of solvent per 453,59 g (pound) of inorganic salt being treated at a temperature of from 5°C to 100°C;
(b) the product resulting from step (B) has a volatiles content of not more than 60 percent by weight based upon the weight of dry inorganic salt;
(c) the drying step (C) is conducted at a temperature of from 40°C to 600°C; and
(d) the resulting product contains not more than 285 ppm total organic carbon.

3. The method of Claim 1 wherein
(a) the contaminated inorganic salt is washed with from 1,14 l to 11.36 l (0.3 to 3 gallon(s)) of solvent per 453,59 g (pound) of inorganic salt being treated at a temperature of from 10°C to 60°C;
(b) the product resulting from step (B) has a volatiles content of not more than 40 percent by weight based upon the weight of dry inorganic salt;
(c) the drying step (C) is conducted at a temperature of from 50°C to 300°C; and
(d) the resultant product contains not more than 140 ppm total organaic carbon.

4. The method of Claim 1 wherein
(a) The contaminated inorganic salt is washed with from 1.89 l to 3.79 l (0.5 to 1 gallon(s)) of solvent per 453,59 g (pound) of inorganic salt being treated at a temperature of from 10°C to 60°C;
(b) the product resulting from step (B) has a volatiles content of not more than 20 percent by weight based upon the weight of dry inorganic salt;
(c) the drying step (C) is conducted at a temperature of from 60°C to 150°C; and
(d) the resultant product contains not more than 70 ppm total organic carbon.

5. The method of Claim 1 wherein the contaminated inorganic salt being treated is an alkali metal halide.

6. The method of Claim 5 wherein
(a) the contaminated inorganic salt being treated is sodium or potassium chloride; and
(b) the solvent employed in step (A) is selected from epichlorohydrin, methyl ethyl ketone, methyl isobutyl ketone, toluene, methanol, ethanol, isopropanol, propylene glycol methyl ether or any combination thereof.

7. The method of Claim 6 wherein
(a) the contaminated inorganic salt being treated is sodium chloride; and
(b) the solvent employed in step (A) is selected from epichlorohydrin, methyl isobutyl ketone, or any combination thereof.

## Patentansprüche

1. Verfahren zum Entfernen relativ hoch siedender chemischer Verunreinigungen aus einem verunreinigten Material durch
(A) Waschen des verunreinigten Materials mit einem Lösemittel oder einem Lösemittelgemisch, ausgewählt aus der Gruppe von Ketonen, Alkoholen, in denen die organische(n) chemische(n) Verunreinigung(en) bei Behandlungstemperatur löslich ist(sind), wobei eine Flüssigkeit gebildet wird, die das(die) Lösemittel und die Verunreinigung(en) enthält, und Abtrennen der Flüssigkeit von dem Material mit einem geeigneten Mittel,
**dadurch gekennzeichnet,**
daß das verunreinigte Material ein anorganisches Salz ist, das mit Reaktionsprodukten von Epihalohydrin und Wasser verunreinigt ist, und die Gruppe von Lösemitteln weiterhin Epihalohydrin, aromatische Kohlenwasserstoffe und Glycolether enthält, und
(B) daß Überschußflüssigkeit von so behandeltem Salz entfernt wird, so daß die entstehende anorganische Salzzusammensetzung nicht mehr als 60 Gew.-% Flüssigkeit enthält,
(C) daß die so behandelte anorganische Salzzusmmensetzung getrocknet wird unter Temperatur- und Druckbedingungen, die ausreichend sind, um in der anorganischen Salzzusammensetzung nach Schritt (B) verbliebenes Lösemittel oder Lösemittelgemisch zu entfernen, so daß ein anorganisches Salz hergestellt wird, das, bezogen auf Trockensubstanz, nicht mehr als 700 Gewichtsteile pro Million Gewichtsteile des gesamten organischen Kohlenstoffs enthält.

2. Verfahren nach Anspruch 1,
**dadurch gekennzeichnet, daß**
(a) das verunreinigte anorganische Salz mit von 0,76 l bis 18,93 l (0,2 bis 5 Gallonen) Lösemittel pro 453,59 g (Pound) anorganischem Salz bei einer Temperatur von 5°C bis 100°C gewaschen wird,
(b) das in Schritt (B) erhaltene Produkt, bezogen auf Gewicht des trockenen anorganischen Salzes, nicht mehr als 60 Gew.-% flüchtige Bestandteile enthält,
(c) der Trocknungsschritt (C) bei einer Temperatur von 40°C bis 600°C ausgeführt wird, und
(d) das erhaltene Produkt nicht mehr als 285 ppm des gesamten organischen Kohlenstoffs enthält.

3. Verfahren nach Anspruch 1,
**dadurch gekennzeichnet, daß**
(a) das verunreinigte anorganische Salz mit von 1,14 l bis 11,36 l (0,3 bis 3 Gallonen) Lösemittel pro 453,59 g (Pound) anorganischem Salz bei einer Temperatur von 10°C bis 60°C gewaschen wird,
(b) das in Schritt (B) erhaltene Produkt, bezogen auf Gewicht des trockenen anorganischen Salzes, nicht mehr als 40 Gew.-% flüchtige Bestandteile enthält,
(c) der Trocknungsschritt (C) bei einer Temperatur von 50°C bis 300°C ausgeführt wird, und
(d) das erhaltene Produkt nicht mehr als 140 ppm des gesamten organischen Kohlenstoffs enthält.

4. Verfahren nach Anspruch 1,
**dadurch gekennzeichnet, daß**
(a) das verunreinigte anorganische Salz mit von 1,89 l bis 3,79 l (0,5 bis 1 Gallone) Lösemittel pro 453,59 g (Pound) anorganischem Salz bei einer Temperatur von 10°C bis 60°C gewaschen wird,
(b) das in Schritt (B) erhaltene Produkt, bezogen auf Gewicht des trockenen anorganischen Salzes, nicht mehr als 20 Gew.-% flüchtige Bestandteile enthält,
(c) der Trocknungsschritt (C) bei einer Temperatur von 60°C bis 150°C ausgeführt wird, und
(d) das erhaltene Produkt nicht mehr als 70 ppm des gesamten organischen Kohlenstoffs enthält.

5. Verfahren nach Anspruch 1,
**dadurch gekennzeichnet,**
daß das verunreinigte anorganische Salz mit einem Alkalihalogenid behandelt wird.

6. Verfahren nach Anspruch 5,
**dadurch gekennzeichnet, daß**
(a) das verunreinigte anorganische Salz mit Natrium- oder Kaliumchlorid behandelt wird und
(b) das in Schritt (A) verwendete Lösemittel ausgewählt ist aus Epichlorhydrin, Methylethylketon, Methylisobutylketon, Toluol, Methanol, Ethanol, Isopropanol Propylenglycolmethylether oder jeder Kombination derselben.

7. Verfahren nach Anspruch 6,
**dadurch gekennzeichnet, daß**
(a) das verunreinigte anorganische Salz mit Natriumchlorid behandelt wird und
(b) das in Schritt (A) verwendete Lösemittel aus Epichlorhydrin, Methylisobutylketon oder jeder Kombination derselben ausgewählt ist.

## Revendications

1. Procédé d'enlèvement, hors d'une matière contaminée, de contaminants chimiques à point d'ébullition relativement élevé comprenant les étapes consistant à :
(A) laver ladite matière contaminée à l'aide d'un solvant ou d'un mélange de solvants choisis dans le groupe formé par les cétones, les alcools dans lesquels le (ou les) contaminants(s) chimique(s) organique(s) est (ou sont) soluble(s) à la température de traitement, en formant ainsi une liqueur contenant le (ou les) solvant(s) et le (ou les) contaminant(s) et séparer la liqueur et ladite matière par un moyen approprié quelconque,
caractérisé en ce que la matière contaminée est un sel inorganique contaminé par des produits de réaction d'épihalohydrine et de l'eau et le groupe de solvants comprend, en outre, des épihalohydrines, des hydrocarbures aromatiques et des éthers-glycols et
(B) la liqueur en excès est enlevée du sel ainsi traité d'une manière telle que la composition du sel inorganique qui en résulte ne contient pas plus de 60 pour cent en poids de liqueur ;
(C) la composition de sel inorganique ainsi traitée est soumise à un séchage dans des conditions de température et de pression suffisantes pour enlever le solvant ou le mélange de solvants résiduel restant dans la composition de sel inorganique après l'étape (B), en produisant ainsi un sel inorganique ne contenant pas en poids, en extrait sec, plus de 700 parties par millions de parties de carbone organique total.

2. Procédé selon la revendication 1, dans lequel
(a) le sel inorganique contaminé est lavé avec 0,76 à 18,93 litres (0,2 à 5 gallon(s)) de solvant pour 453,59 g (1 livre) du sel inorganique traité à une température comprise entre 5°C et 100°C ;
(b) le produit résultant de l'étape (B) a une teneur en matières volatiles d'au plus 60 pour cent en poids sur la base du poids de sel inorganique sec ;
(c) l'étape de séchage (C) est conduite à une température comprise entre 40°C et 600°C ; et
(d) le produit résultant ne contient pas plus de 285 ppm de carbone organique total.

3. Procédé selon la revendication 1, dans lequel
(a) le sel inorganique contaminé est lavé avec 1,14 l à 11,36 l (0,3 à 3 gallon(s)) de solvant pour 453,59 g (1 livre) de sel inorganique traité à une température comprise entre 10°C et 60°C ;
(b) le produit résultant de l'étape a une teneur en matières volatiles (b) d'au plus 40 pour cent en poids sur la base du poids de sel inorganique sec ;
(c) l'étape de séchage (C) est conduite à une température comprise entre 50°C et 300°C ; et
(d) le produit qui en résulte ne contient pas plus de 140 ppm de carbone organique total.

4. Procédé selon la revendication 1, dans lequel
(a) le sel inorganique contaminé est lavé avec l'aide de 1,89 à 3,79 litres (0,5 à 1 gallon) de solvant pour 453,59 g (1 livre) de sel inorganique traité à une température comprise entre 10°C et 60°C ;
(b) le produit résultant de l'étape (B) a une teneur en matières volatiles d'au plus 20 pour cent en poids sur la base du poids de sel inorganique sec ;
(c) l'étape de séchage (C) est conduite à une température comprise entre 60°C et 150°C ; et
(d) le produit qui en résulte ne contient pas plus de 70 ppm de carbone organique total.

5. Procédé selon la revendication 1, dans lequel le sel inorganique contaminé traité est un halogénure de métal alcalin.

6. Procédé selon la revendication 1, dans lequel
(a) le sel inorganique contaminé traité est du chlorure de sodium ou de potassium ; et
(b) le solvant employé à l'étape (A) est choisi parmi l'épichlorohydrine, la méthyl éthyl cétone, la méthyl isobutyl cétone, le toluène, le méthanol, l'éthanol, l'isopropanol, le propylène glycol méthyl éther ou une combinaison quelconque de ceux-ci.

7. Procédé selon la revendication 6, dans lequel
(a) le sel inorganique contaminé traité est du chlorure de sodium ; et
(b) le solvant employé à l'étape (A) est choisi parmi l'épichlorohydrine, la méthyl isobutyl cétone ou une combinaison quelconque de ceux-ci.
